# EUROPÄISCHE PATENTSCHRIFT

(11) **EP 2 527 258 B1**
(45) Veröffentlichungstag und Bekanntmachung des Hinweises auf die Patenterteilung: **31.12.2014**
(21) Anmeldenummer: 11450066.3
(22) Anmeldetag: 24.05.2011
(51) Int. Cl.: B64G 1/22, B23H 1/00, B23H 7/02, B23H 9/14, B64G 1/40, B64G 1/66

(54) **Verfahren zur Herstellung eines Auslegers für Raumflugkörper**
Method for manufacturing a boom for spacecraft
Procédé de fabrication d'un bras pour véhicule spatial

(43) Veröffentlichungstag der Anmeldung: 28.11.2012
(73) Patentinhaber: RUAG Space GmbH, 1120 Wien (AT)
(72) Erfinder: Neugebauer, Christian, 1230 Wien (AT); Ignjatov, Zoran, 1030 Wien (AT)
(74) Vertreter: Keschmann, Marc

(56) Entgegenhaltungen:
- DE-A1- 2 108 278
- FR-A1- 2 770 308
- US-A1- 2009 286 100
- "EDM: A CONTENDER FOR LARGE PRODUCTION RUNS", AUTOMOTIVE ENGINEERING, SOCIETY OF AUTOMOTIVE ENGINEERS. WARRENDALE, US, Bd. 100, Nr. 11, 1. November 1992 (1992-11-01), Seiten 11-14, XP000323925, ISSN: 0098-2571

## Beschreibung

Die Erfindung betrifft ein Verfahren zur Herstellung eines Auslegers für Raumflugkörper, insbesondere Satelliten, aus einem vollen quaderförmigen Körper.

Die Erfindung betrifft weiters einen Ausleger für Raumflugkörper, insbesondere Satelliten, umfassend ein räumliches Fachwerk, das aus einem vollen quaderförmigen Körper hergestellt ist.

Antennen, Triebwerke oder bestimmte Messgeräte können oft nicht direkt am Raumflugkörper, insbesondere Satelliten angebracht werden, sondern müssen an einem Ausleger befestigt werden. Aus dem Stand der Technik sind verschiedene Bauformen von solchen Auslegern bekannt, siehe DE2108278. Bei Stangen aus kohlefaser- oder glasfaserverstärktem Kunststoff (sogenannten CFK-Booms bzw. GFK-Booms) werden Kohlefasern bzw. Glasfasern in Spannungshauptrichtung zylindrisch um einen stangenförmigen Träger gewickelt und in den Kunststoff gebettet. Hiermit ist der Vorteil der geringen Masse bei großen Auslegerlängen verbunden. Nachteilig sind allerdings die hohen Kosten sowie die Notwendigkeit von massereichen Inserts aus Titan-Legierung zur Anbindung des Auslegers an eine Struktur des Raumflugkörpers.

Weiters sind stangenförmige, teleskopierbare Ausleger bekannt (sogenannte Telescopic Booms), die besonders wegen ihrer kompakten Bauweise im eingezogenen Zustand bevorzugt werden. Nachteilig sind wiederum die hohen Kosten sowie die geringe Steifigkeit und die geringere Zuverlässigkeit.

Weiters können Ausleger als gebauter Kastenträger ausgebildet sein. Der Träger wird hierbei aus mehreren Einzelelementen zusammengesetzt, die einen geschlossenen, steifen Kasten bilden. Dem Vorteil der geringen Kosten steht der Nachteil der hohen Masse gegenüber.

Schließlich sind Fachwerkstrukturen bekannt, die durch Fräsen aus dem Vollen gearbeitet sind. Die Geometrie ist einem herkömmlichen Fachwerk nachempfunden, allerdings fehlen gegenüber dem idealen Fachwerk in der Regel eine Reihe von für die Stabilität wichtigen Stäben, da andernfalls die für das Fräsen erforderliche Zugänglichkeit nicht gegeben wäre. Ein anderer Nachteil ist, dass die Bauteile relativ dickwandig sind, damit sie dem während der Fräsbearbeitung auftretenden Schnittdruck standhalten. Auf Grund ihrer hohen Masse und ihrer geringen Tragfähigkeit sind solche Fachwerksstrukturen eher nur für kurze Trägerlängen geeignet.

Es besteht somit das Bedürfnis, einen Ausleger sowie ein Verfahren zur Herstellung eines Auslegers zu schaffen, mit welchem die oben genannten Nachteile vermieden werden. Insbesondere sollen zumindest einige der nachfolgend genannten Anforderungen erfüllt werden.
- Hohe Steifigkeit
- Hohe Eigenfrequenzen
- Hohe Knicksicherheit
- Geringe Masse
- Massenarme Anbindung an angrenzende Strukturen
- Anschraubpunkte für Leitungen oder Kabel sollen einfach anbringbar sein
- Verwendung von für die Raumfahrt zugelassenen Materialien
- Minimale Verbiegung durch Temperatureinwirkung
- Geringe Fertigungskosten
- Die für die Herstellung verwendeten Prozesse müssen beherrscht und prüfbar sein
- Die mechanischen und elektrischen Sicherheiten müssen durch etablierte Berechnungsmethoden nachweisbar sein.

Zur Lösung dieser Aufgabe sieht die Erfindung gemäß einem ersten Aspekt ein Verfahren zur Herstellung eines Auslegers für Raumflugkörper, insbesondere Satelliten, aus einem vollen quaderförmigen Körper vor, das dadurch gekennzeichnet ist, dass der Körper in wenigstens zwei quer zueinander verlaufenden, bevorzugt orthogonalen oder zueinander in steilem Winkel stehenden Aufspannungen jeweils mit Hilfe eines funkenerosiven Bearbeitungsverfahrens bearbeitet wird, wobei jeweils mehrere sich durch den Körper erstreckende Durchbrechungen erzeugt werden, sodass sich ein durch die Verschneidung der einander kreuzenden Durchbrechungen definiertes räumliches Fachwerk ergibt. Durch den Einsatz eines funkenerosiven Bearbeitungsverfahrens gelingt es in einfacher Weise, aus einem vollen Körper ein räumliches Fachwerk zu erzeugen, das aus einer Vielzahl von Stäben in integraler, d.h. einteiliger Bauweise besteht. Dabei sind beim Erodieren lediglich zwei bevorzugt orthogonale Aufspannungen erforderlich. Aufgrund der einteiligen Bauweise sind keine mechanischen Verbindungen der Stäbe innerhalb der Auslegerstruktur erforderlich, die eine gesonderte Berechnung benötigen, die Zusammenbauzeit erhöhen, und die Masse erhöhen würden. Mit dem erfindungsgemäßen Verfahren sind im Gegensatz zu dem aus dem Stand der Technik bekannten Fräsverfahren überaus dünnwandige Einzelstäbe fertigbar. Beim Fräsen wären so dünnwandige Strukturen insbesondere aufgrund des Schnittdrucks des Werkzeugs nicht möglich.

Weiters erlaubt es das erfindungsgemäße Verfahren in einfacher und kostengünstiger Weise besonders kurze Einzelstablängen zu realisieren, womit eine hohe Eigenfrequenz und eine hohe Knicksicherheit verbunden sind.

Die einteilige Bauweise bringt wegen der homogenen Materialeigenschaften den Vorteil einer einfachen Berechnung des Fachwerks mittels Standard-Finite-Elemente-Verfahren mit sich. Weiters können Verbindung zu angrenzenden Bauelementen direkt in den Ausleger integriert werden, was Massen- und Kostenvorteile bringt. Ebenso können Anschraubpunkte für Leitungen oder Kabel integral mitgefertigt werden.

Bevorzugt wird so vorgegangen, dass die Durchbrechungen mittels Drahterosion hergestellt werden. Damit wird eine kostengünstige Fertigung mittels eines Standardverfahrens möglich. Das Senk-Erodieren wäre grundsätzlich ebenso denkbar, würde die Fertigungskosten jedoch steigern. Das Drahterodieren ist ein Schneidverfahren, welches nach dem Prinzip des Funkenerodierens arbeitet. Verschiedene Ausbildungen von Maschinen zur Drahterosion sind dem Fachmann aus dem Stand der Technik bekannt und brauchen daher nicht näher erläutert zu werden. Der Erodiervorgang beginnt in einer Startlochbohrung, die durch Bohren oder Senkerodieren in den vollen quaderförmigen Körper eingebracht wurde. Durch diese Startlochbohrung muss der Draht eingefädelt werden. Im Rahmen des erfindungsgemäßen Verfahrens verlaufen die Startlochbohrung und der Erodierdraht in beiden Aufspannungen bevorzugt senkrecht zur Außenfläche des quaderförmigen Körpers.

Im Rahmen der Erfindung können in einfacher Weise Standard-Raumfahrtwerkstoffe verwendet werden. Besonders bevorzugt ist hierbei eine Verfahrensweise, bei welcher der Körper aus einer Aluminium- oder einer Titan-Legierung besteht. Bei einer Fertigung aus Aluminium-Legierungen wird der Vorteil der hohen Wärmeleitfähigkeit besonders dahingehend ausgenützt, dass diese zu einer homogenen Temperaturverteilung innerhalb des Auslegers und so zu einer hohen Temperaturstabilität führt.

Eine bevorzugte Ausbildung des räumlichen Fachwerks ergibt sich, wenn in der ersten Aufspannung und in der zweiten Aufspannung jeweils Durchbrechungen mit rautenförmigem Querschnitt oder Durchbrechungen mit dreieckigem Querschnitt oder Kombinationen hiervon hergestellt werden. Hierbei entsteht eine Anordnung der Stäbe des Fachwerks derart, dass sich an den Außenseiten rautenförmige oder dreieckige Felder oder Kombinationen hiervon ausbilden und sich gleichzeitig Diagonalstäbe ergeben, die sich zwischen Knotenpunkten der Rauten- bzw. Dreiecksfelder erstrecken.

Eine in Bezug auf die Belastbarkeit besonders bevorzugte Geometrie ergibt sich, wenn Durchbrechungen mit rautenförmigem Querschnitt und Durchbrechungen mit dreieckigem Querschnitt derart miteinander kombiniert werden, dass die rautenförmigen Querschnitte mit ihren Spitzen aneinanderstoßen und zwischen zwei benachbarten rautenförmigen Querschnitten zwei dreieckige Bereiche verbleiben, und dass in den dreieckigen Bereichen jeweils wenigstens eine Durchbrechung mit dreieckigem Querschnitt hergestellt wird. Bevorzugt wird diese Kombination der rautenförmigen und der dreieckigen Durchbrechungen in beiden Aufspannungen verwendet. Besonders bevorzugt kann hierbei so vorgegangen werden, dass die Durchbrechungen mit dreieckigem Querschnitt in ihrer Symmetrieebene eine Teilungsebene aufweisen. Auf Grund dieser Teilungsebene entsteht in der Dreiecksebene ein Nullstab.

Um nun zu verhindern, dass bei der beschriebenen Kombination von Durchbrechungen nach deren Erzeugung in den zwei Aufspannungen eine sich zwischen den Außenseiten erstreckende Querebene verbleibt, wird bevorzugt so vorgegangen, dass die Teilungen der in der ersten Aufspannung erzeugten Durchbrechungen mit rautenförmigem Querschnitt gegenüber den Teilungen der in der zweiten Aufspannung erzeugten Durchbrechungen mit rautenförmigem Querschnitt um eine halbe Teilung versetzt sind. Dadurch gelingt eine weitere Materialverringerung und damit verbunden eine Verringerung des Gewichts.

Hierbei kann weiters vorgesehen sein, dass die Durchbrechungen mit rautenförmigem Querschnitt in ihrer in Trägerlängsrichtung verlaufenden Symmetrieebene eine Teilungsebene aufweisen. Bevorzugt wird diese Teilungsebene lediglich in einer der beiden Aufspannungen ausgebildet und es entsteht hierbei eine Mittelebene mit einer Stabanordnung, die der Stabanordnung der hierzu parallelen Außenflächen entspricht.

Gemäß einer alternativen Vorgehensweise ist vorgesehen, dass in der ersten Aufspannung die zuvor beschriebene Kombination von Durchbrechungen hergestellt wird und dass in der zweiten Aufspannung lediglich Durchbrechungen mit dreieckigem Querschnitt hergestellt werden, wobei zwischen zwei auf einer Dreieckseite stehenden Dreiecken ein auf der Spitze stehendes Dreieck angeordnet ist.

Eine weitere Alternative sieht vor, dass sowohl in der ersten als auch in der zweiten Aufspannung lediglich Durchbrechungen mit dreieckigem Querschnitt hergestellt werden, wobei zwischen zwei auf einer Dreieckseite stehenden Dreiecken ein auf der Spitze stehendes Dreieck angeordnet ist.

Zur Lösung der zugrunde liegenden Aufgabe sieht die Erfindung gemäß einem zweiten Aspekt einen Ausleger für Raumflugkörper, insbesondere Satelliten, vor, umfassend ein räumliches Fachwerk, das aus einem vollen quaderförmigen Körper hergestellt ist, wobei das räumliche Fachwerk aus Stäben besteht, deren Querschnitt viereckig, bevorzugt rechteckig oder parallelogrammartig, mit einer Seitenlänge des Vierecks von kleiner als 6 mm, bevorzugt kleiner 4 mm ausgebildet ist. Insbesondere ist das Fachwerk aus dem vollen Körper durch ein funkenerosives Bearbeitungsverfahren, insbesondere durch Drahterodieren, hergestellt. Auf Grund des überaus kleinen Querschnittes der einzelnen Stäbe des Fachwerks ist es möglich, ein für Raumfahrtanwendungen überaus günstiges Verhältnis von Bauraum zu Belastbarkeit und von Masse zu Belastbarkeit zu erreichen.

Bevorzugt ist der Querschnitt aller Stäbe des Fachwerks gleich gewählt.

Bevorzugt besteht der Körper aus einer Aluminium- oder einer Titan-Legierung.

Entsprechend den zuvor beim erfindungsgemäßen Verfahren beschriebenen bevorzugten Verfahrensweisen, sind folgende vorteilhafte Ausführungsmöglichkeiten des erfindungsgemäßen Auslegers zu nennen. Bevorzugt ist vorgesehen, dass die Stäbe derart angeordnet sind, dass an den Außenseiten des Fachwerks rautenförmige Felder oder dreieckige Felder oder Kombinationen von rautenartigen mit dreieckigen Feldern ausgebildet sind.

Die Stäbe können dabei derart angeordnet sein, dass die rautenförmigen Felder einer Außenseite mit ihren Spitzen aneinanderstoßen und zwischen zwei benachbarten rautenförmigen Feldern wenigstens zwei dreieckige Felder angeordnet sind. Die dreieckigen Felder können in der Dreiecksebene durch einen Nullstab geteilt sein.

Bevorzugt sind die rautenförmigen bzw. die dreieckigen Felder der beiden gegenüberliegenden Außenseiten in der Normalprojektion jeweils deckungsgleich.

Bevorzugt sind sich zwischen den Außenseiten erstreckende Diagonalstäbe so angeordnet, dass sie mit Stäben der rautenförmigen bzw. dreieckigen Felder in der Normalprojektion deckungsgleich sind.

Bevorzugt sind die Teilungen der rautenförmigen Felder des einen Paars von gegenüberliegenden Außenseiten gegenüber den Teilungen der rautenförmigen Felder des anderen Paars von gegenüberliegenden Außenseiten um eine halbe Teilung versetzt.

Bevorzugt sind die rautenförmigen Felder in der Rautenebene durch einen in Trägerlängsrichtung verlaufenden Nullstab geteilt.

Bevorzugt weist das eine Paar von gegenüberliegenden Außenseiten die zuvor beschriebene Kombination von Feldern auf und das andere Paar von gegenüberliegenden Außenseiten weist lediglich dreieckige Felder auf, wobei zwischen zwei auf einer Dreieckseite stehenden Dreiecken ein auf der Spitze stehendes Dreieck angeordnet ist.

Alternativ weisen das eine Paar von gegenüberliegenden Au-ßenseiten als auch das andere Paar von gegenüberliegenden Außenseiten lediglich dreieckige Felder auf, wobei zwischen zwei auf einer Dreieckseite stehenden Dreiecken ein auf der Spitze stehendes Dreieck angeordnet ist.

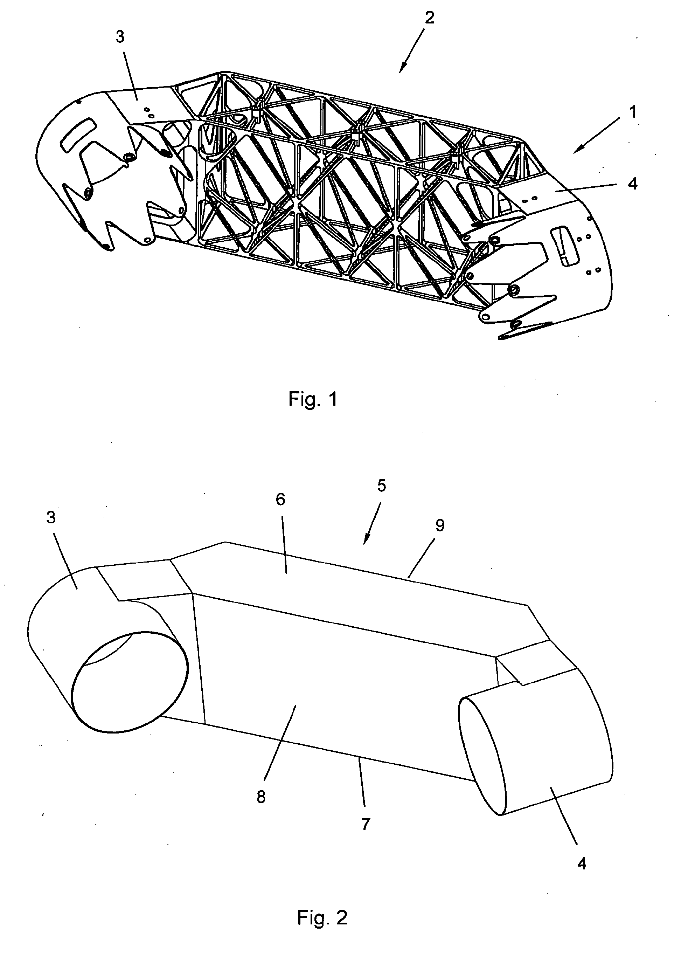

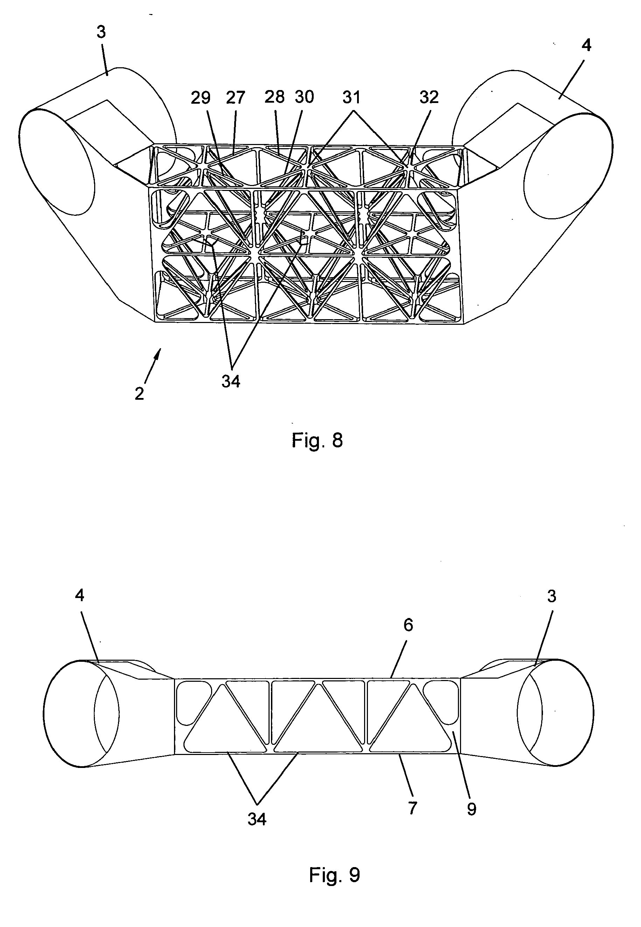

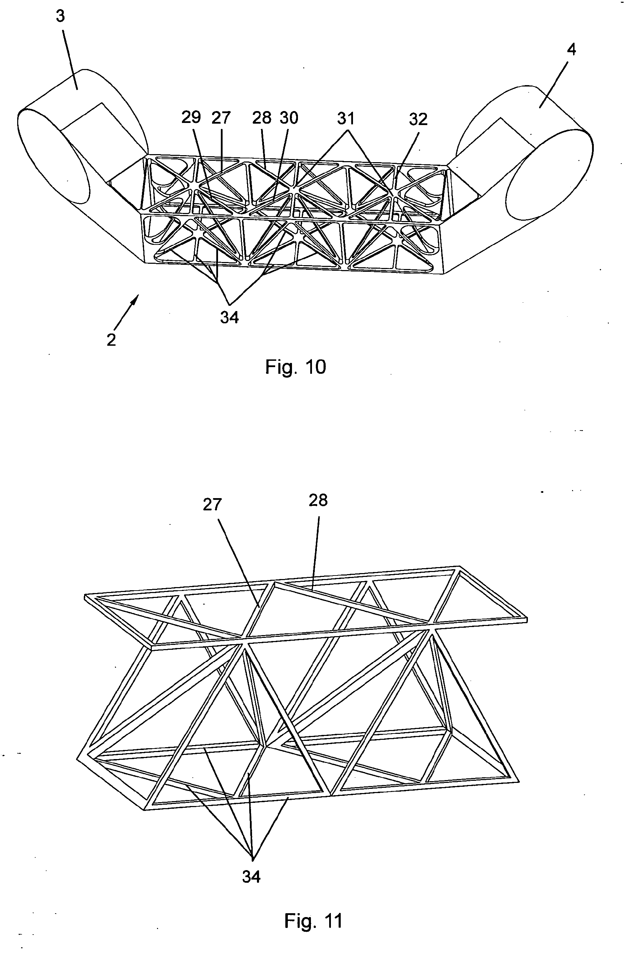

Die Erfindung wird nachfolgend anhand eines in der Zeichnung schematisch dargestellten Ausführungsbeispiels näher erläutert. In dieser zeigen Fig. 1 ein erstes Ausführungsbeispiel eines erfindungsgemäßen Auslegers, Fig. 2 bis 6 zeigen die einzelnen Zwischenstufen bei der Herstellung des Auslegers der Fig. 1, Fig. 7 und 8 ein zweites Ausführungsbeispiel eines erfindungsgemäßen Auslegers, Fig. 9 und 10 ein drittes Ausführungsbeispiel eines erfindungsgemäßen Auslegers und Fig. 11 ein viertes Ausführungsbeispiel eines erfindungsgemäßen Auslegers.

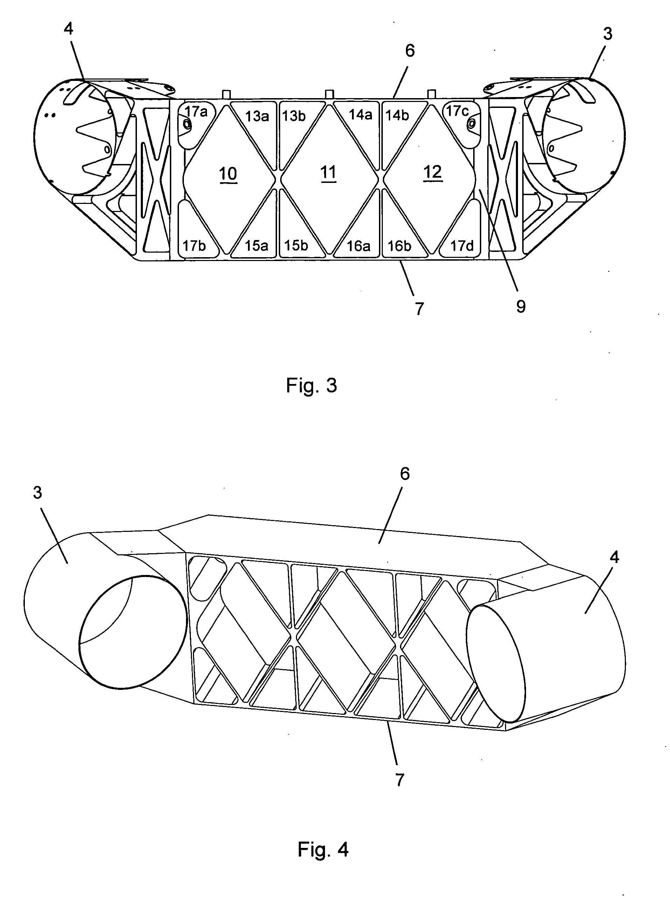

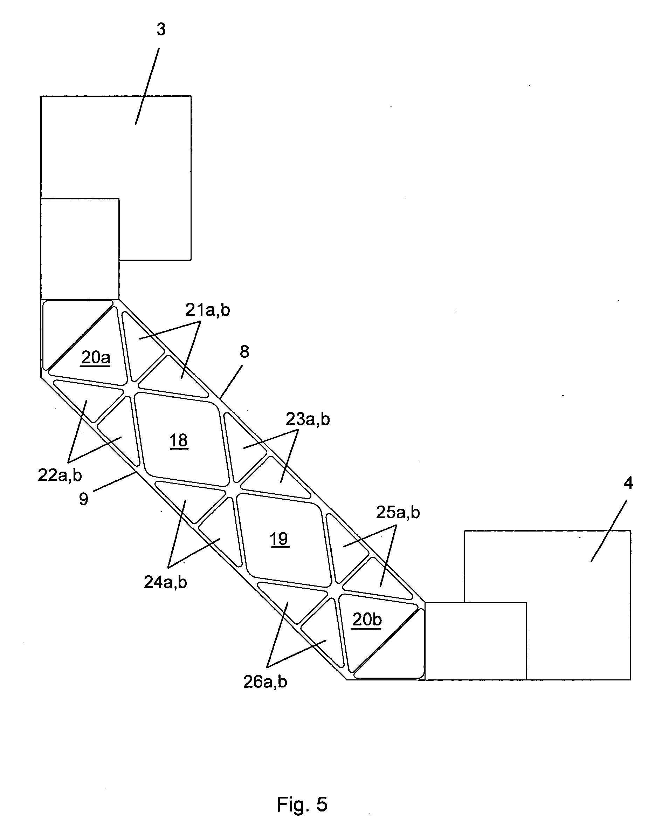

In Fig. 1 ist ein Ausleger 1 gezeigt, der ein räumliches Fachwerk 2 sowie an beiden Enden des Fachwerks einstückig mit diesem ausgebildete Motoranschlüsse 3 und 4 umfasst. Das räumliche Fachwerk 2 weist eine quaderförmige Grundform mit zwei Stirnseiten und Außenseiten auf. Wie sich noch aus den nachfolgenden Darstellungen genauer ersehen lässt, weist das räumliche Fachwerk 2 eine Vielzahl von Stäben auf, wobei sowohl Stäbe vorgesehen sind, die in den einzelnen Ebenen der Außenseiten verlaufen, als auch Diagonalstäbe vorgesehen sind, die sich schräg zwischen den Außenseiten erstrecken. Die in der Ebene der Außenseiten verlaufenden Stäbe sind so angeordnet, dass die Stäbe zweier gegenüberliegender Außenseiten in der Normalprojektion jeweils deckungsgleich sind. Die Herstellung des in Fig. 1 dargestellten Auslegers 1 wird nun anhand der Figuren 2 bis 6 erläutert. In Fig. 2 ist das vorgefertigte Rohmaterial mit den vorgefertigten Motoranschlüssen 3 und 4 dargestellt. Das Rohmaterial wird von einem quaderförmigen Materialblock 5 gebildet, der beispielsweise aus einer Aluminiumlegierung besteht. Die Motoranschlüsse 3 und 4 sind einteilig mit dem quaderförmigen Block 5 ausgebildet. Der quaderförmige Block 5 weist ein erstes Paar von gegenüberliegenden Außenseiten 6 und 7 sowie ein zweites Paar von gegenüberliegenden Au-ßenseiten 8 und 9 auf. In einem ersten Arbeitsschritt wird das vorgefertigte Rohmaterial in einer nicht näher dargestellten Drahterodiermaschine aufgespannt. Danach wird eine Startlochbohrung hergestellt, die den Materialblock 5 durchsetzt und zwar senkrecht auf die Außenseiten 8 bzw. 9. In diese Startlochbohrung wird in der Folge der Erodierdraht eingeführt, und es wird die in Fig. 3 im Aufriss dargestellte Kontur hergestellt. Dabei werden rautenförmige Durchbrechungen 10, 11 und 12 hergestellt, wobei in den jeweils dazwischen liegenden dreieckigen Bereichen dreieckige Durchbrechungen 13a,b, 14a,b, 15a,b und 16a,b hergestellt werden. In den Ecken werden Durchbrechungen 17a,b,c und d hergestellt. Das Ergebnis dieser Materialbearbeitung ist in Fig. 4 in perspektivischer Ansicht dargestellt. Als Ergebnis des in der ersten Aufspannung durchgeführten Erodierverfahrens verbleibt somit eine Mehrzahl von Stegen, aus denen im nachfolgenden Erodierschritt die Stäbe des räumlichen Fachwerks hergestellt werden. Zu diesem Zweck wird der Grundkörper in einer zur ersten Aufspannung orthogonalen Richtung in der Drahterodiermaschine aufgespannt, und es wird eine den Grundkörper durchsetzende Startlochbohrung vorgenommen, die senkrecht zu den Außenseiten 6 bzw. 7 verläuft. In diese Startlochbohrung wird wiederum der Erodierdraht eingefädelt, und es wird in der Folge die in Fig. 5 dargestellte Kontur im Grundriss geschnitten. Dabei werden wiederum rautenförmige Durchbrechungen 18 und 19 hergestellt, wobei an den Rändern halbe Rautenfelder 20a und 20b entstehen. Zwischen den rautenförmigen Durchbrechungen verbleiben wiederum dreieckige Bereiche, in denen dreieckige Durchbrechungen 21a,b, 22a,b, 23a,b, 24a,b, 25a,b und 26a,b herstellt werden.

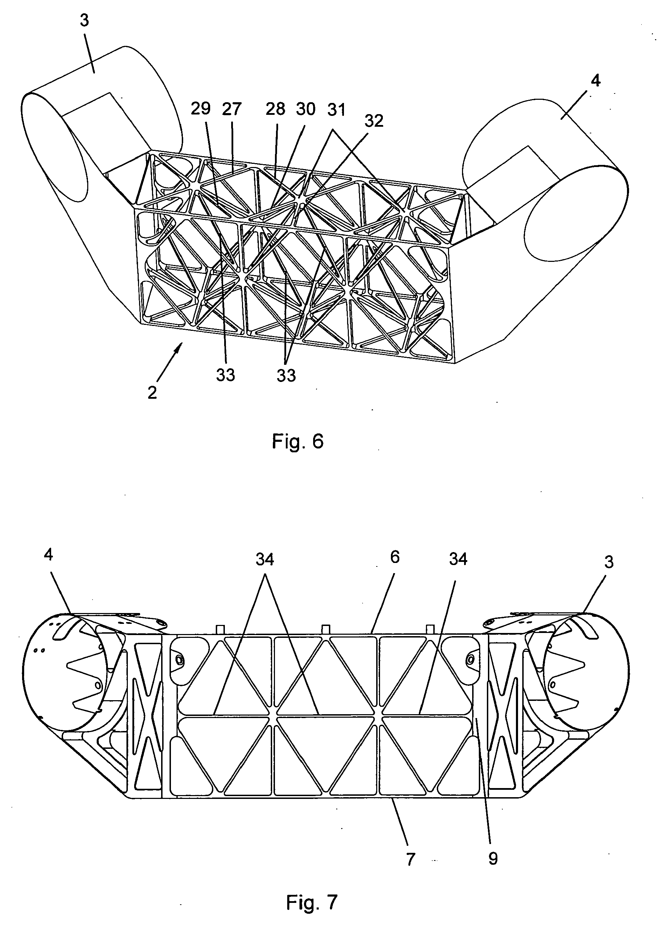

Das auf diese Art und Weise hergestellte Fachwerk ist in Fig. 6 dargestellt und entspricht der bereits in Fig. 1 dargestellten Geometrie. Aufgrund des Drahterodierens in zwei orthogonalen Aufspannungen ist eine Vielzahl von Stäben entstanden, wobei die Stäbe an jeder der vier Außenseiten rautenförmige Felder ausbilden, zwischen denen jeweils dreieckige Felder angeordnet sind. Dabei sind die rautenförmigen Felder des einen Paars von gegenüberliegenden Außenseiten gegenüber den rautenartigen Feldern des anderen Paars von gegenüberliegenden Außenseiten um eine halbe Teilung gegeneinander versetzt angeordnet. Dies ist in Fig. 6 hervorgehoben. In Fig. 6 sind die Stäbe eines der rautenförmigen Felder exemplarisch mit 27, 28, 29 und 30 bezeichnet. Am Knotenpunkt 31 stößt das eine rautenförmige Feld mit dem benachbarten rautenförmigen Feld aneinander. Zwischen den rautenartigen Feldern sind Dreiecksfelder angeordnet, wobei ein in der Ebene des Dreiecks verlaufender Nullstab mit 32 bezeichnet ist. Die Diagonalstäbe, die sich jeweils zwischen den Knotenpunkten erstrecken, an denen die rautenförmigen Felder aneinanderstoßen, sind exemplarisch mit 33 bezeichnet.

In den Figuren 7 und 8 ist ein zweites Ausführungsbeispiel des Auslegers mit einer alternativen Ausbildung des Fachwerks dargestellt. Der einzige Unterschied gegenüber dem in den Figuren 1 bis 6 dargestellten Fachwerk ist, dass in dem in Fig. 7 dargestellten Aufriss die Rautenfelder in der Rautenebene geteilt sind, sodass sich zusätzliche Stäbe 34 ergeben. In der perspektivischen Ansicht gemäß Fig. 8 ist ersichtlich, dass die zusätzlichen Stäbe 34 im Vergleich zur Ausbildung gemäß den Figuren 1 bis 6 eine zusätzliche Mittelebene ausbilden, die parallel zu den beiden korrespondierenden Außenseiten verläuft.

Ein drittes Ausführungsbeispiel mit einer weiteren alternativen Ausbildung des Fachwerks ist in den Figuren 9 und 10 dargestellt. Dabei sind im Vergleich zur Ausbildung gemäß den Figuren 1 bis 6 die im Aufriss ersichtlichen Rautenfelder durch Dreiecksfelder ersetzt. Es ergibt sich somit eine Ausführung, bei der die im Aufriss ersichtlichen Außenseiten der Hälfte der in Fig. 8 dargestellten Ausführungsform entspricht. Der Aufriss dieser dritten Ausführungsform ist in Fig. 9 dargestellt. Die perspektivische Ansicht ist in Fig. 10 dargestellt.

In der in Fig. 11 dargestellten vierten Ausführungsform sind nun die Rautenfelder der in Fig. 1 bis 6 dargestellten ersten Ausführungsform in allen Außenseiten durch Dreiecksfelder ersetzt.

Die erste Ausführungsform ist die vorteilhafteste in Bezug auf das Verhältnis zwischen Bauraum und Belastbarkeit sowie in Bezug auf das Verhältnis zwischen Masse und Belastbarkeit. Die zweite Ausführungsform ist im Vergleich hierzu weniger günstig in Bezug auf die Masse, da die zusätzlich eingeführte Mittelebene die Biegelast nicht mitträgt. Die dritte und die vierte Ausführungsform haben größere freie Knicklängen und sind daher weniger tragfähig.

## Patentansprüche

1. Verfahren zur Herstellung eines Auslegers für Raumflugkörper, insbesondere Satelliten, aus einem vollen quaderförmigen Körper, **dadurch gekennzeichnet, dass** der Körper in zwei quer zueinander verlaufenden, bevorzugt orthogonalen oder zueinander in steilem Winkel stehenden Aufspannungen jeweils mit Hilfe eines funkenerosiven Bearbeitungsverfahrens bearbeitet wird, wobei jeweils mehrere sich durch den Körper erstreckende Durchbrechungen erzeugt werden, sodass sich ein durch die Verschneidung der einander kreuzenden Durchbrechungen definiertes räumliches Fachwerk ergibt.

2. Verfahren nach Anspruch 1, **dadurch gekennzeichnet, dass** die Durchbrechungen mittels Drahterosion hergestellt werden.

3. Verfahren nach Anspruch 1 oder 2, **dadurch gekennzeichnet, dass** der Körper aus einer Aluminium- oder einer Titan-Legierung besteht.

4. Verfahren nach Anspruch 1, 2 oder 3, **dadurch gekennzeichnet, dass** in der ersten Aufspannung und in der zweiten Aufspannung jeweils Durchbrechungen mit rautenförmigem Querschnitt oder Durchbrechungen mit dreieckigem Querschnitt oder Kombinationen hiervon hergestellt werden.

5. Verfahren nach Anspruch 4, **dadurch gekennzeichnet, dass** Durchbrechungen mit rautenförmigem Querschnitt und Durchbrechungen mit dreieckigem Querschnitt derart miteinander kombiniert werden, dass die rautenförmigen Querschnitte mit ihren Spitzen aneinanderstoßen und zwischen zwei benachbarten rautenförmigen Querschnitten zwei dreieckige Bereiche verbleiben, und dass in den dreieckigen Bereichen jeweils wenigstens eine Durchbrechung mit dreieckigem Querschnitt hergestellt wird.

6. Verfahren nach Anspruch 4 oder 5, **dadurch gekennzeichnet, dass** die Durchbrechungen mit dreieckigem Querschnitt in ihrer Symmetrieebene eine Teilungsebene aufweisen.

7. Verfahren nach Anspruch 5 oder 6, **dadurch gekennzeichnet, dass** sowohl in der ersten als auch in der zweiten Aufspannung eine Kombination von Durchbrechungen gemäß Anspruch 5 oder 6 hergestellt wird, wobei die Teilungen der in der ersten Aufspannung erzeugten Durchbrechungen mit rautenförmigem Querschnitt gegenüber den Teilungen der in der zweiten Aufspannung erzeugten Durchbrechungen mit rautenförmigem Querschnitt um eine halbe Teilung versetzt sind.

8. Verfahren nach einem der Ansprüche 4 bis 7, **dadurch gekennzeichnet, dass** die Durchbrechungen mit rautenförmigem Querschnitt in ihrer in Trägerlängsrichtung verlaufenden Symmetrieebene eine Teilungsebene aufweisen.

9. Verfahren nach einem der Ansprüche 4 bis 6, **dadurch gekennzeichnet, dass** in der ersten Aufspannung eine Kombination von Durchbrechungen gemäß Anspruch 5 oder 6 hergestellt wird und dass in der zweiten Aufspannung lediglich Durchbrechungen mit dreieckigem Querschnitt hergestellt werden, wobei zwischen zwei auf einer Dreieckseite stehenden Dreiecken ein auf der Spitze stehendes Dreieck angeordnet ist.

10. Verfahren nach Anspruch 4 oder 6, **dadurch gekennzeichnet, dass** sowohl in der ersten als auch in der zweiten Aufspannung lediglich Durchbrechungen mit dreieckigem Querschnitt hergestellt werden, wobei zwischen zwei auf einer Dreieckseite stehenden Dreiecken ein auf der Spitze stehendes Dreieck angeordnet ist.

11. Ausleger für Raumflugkörper, insbesondere Satelliten, umfassend ein räumliches Fachwerk (2), das aus einem vollen quaderförmigen Körper (5) hergestellt ist, **dadurch gekennzeichnet, dass** das räumliche Fachwerk (2) aus Stäben (27,28,29,30,32,34) besteht, deren Querschnitt viereckig, bevorzugt rechteckig oder parallelogrammartig, mit einer Seitenlänge des Vierecks von kleiner als 6 mm, bevorzugt kleiner 4 mm ausgebildet ist.

12. Ausleger nach Anspruch 11, **dadurch gekennzeichnet, dass** der Körper (5) aus einer Aluminium- oder einer Titan-Legierung besteht.

13. Ausleger nach Anspruch 11 oder 12, **dadurch gekennzeichnet, dass** die Stäbe (27,28,29,30,32,34) derart angeordnet sind, dass an den Außenseiten des Fachwerks (2) rautenförmige Felder (10,11,12,18,19) oder dreieckige Felder (13a,b - 17a-d; 20a,b - 26a,b) oder Kombinationen von rautenartigen mit dreieckigen Feldern ausgebildet sind.

14. Ausleger nach Anspruch 13, **dadurch gekennzeichnet, dass** die Stäbe (27,28,29,30) derart angeordnet sind, dass die rautenförmigen Felder (10,11,12,18,19) einer Außenseite (6,7,8,9) mit ihren Spitzen aneinanderstoßen und zwischen zwei benachbarten rautenförmigen Feldern (10,11,12,18,19) wenigstens zwei dreieckige Felder (13a,b - 16a,b; 21a,b - 26a,b) angeordnet sind.

15. Ausleger nach Anspruch 13 oder 14, **dadurch gekennzeichnet, dass** die dreieckigen Felder (13a,b - 16a,b; 21a,b - 26a,b) in der Dreiecksebene durch einen Nullstab (32) geteilt sind.

16. Ausleger nach Anspruch 13, 14 oder 15, **dadurch gekennzeichnet, dass** die routenförmigen (10,11,12,18,19) bzw. die dreieckigen Felder (13a,b - 17a-d; 20a,b - 26a,b) der beiden gegenüberliegenden Außenseiten (6,7; 8,9) in der Normalprojektion jeweils deckungsgleich sind.

17. Ausleger nach Anspruch 16, **dadurch gekennzeichnet, dass** sich zwischen den Außenseiten (6,7,8,9) erstreckende Diagonalstäbe (33) so angeordnet sind, dass sie mit Stäben der rautenförmigen bzw. dreieckigen Felder in der Normalprojektion deckungsgleich sind.

18. Ausleger nach einem der Ansprüche 14 bis 17, **dadurch gekennzeichnet, dass** die Teilungen der rautenförmigen Felder (10,11,12) des einen Paars von gegenüberliegenden Außenseiten (8,9) gegenüber den Teilungen der rautenförmigen Felder (18,19) des anderen Paars von gegenüberliegenden Außenseiten (6,7) um eine halbe Teilung versetzt sind.

19. Ausleger nach einem der Ansprüche 14 bis 18, **dadurch gekennzeichnet, dass** die rautenförmigen Felder (10,11,12) in der Rautenebene durch einen in Trägerlängsrichtung verlaufenden Nullstab (34) geteilt sind.

20. Ausleger nach einem der Ansprüche 14 bis 17, **dadurch gekennzeichnet, dass** das eine Paar von gegenüberliegenden Außenseiten (6,7) eine Kombination von Feldern gemäß Anspruch 14 oder 15 aufweist und dass das andere Paar von gegenüberliegenden Außenseiten (8,9) lediglich dreieckige Felder aufweist, wobei zwischen zwei auf einer Dreieckseite stehenden Dreiecken ein auf der Spitze stehendes Dreieck angeordnet ist.

21. Ausleger nach Anspruch 13 oder 15, **dadurch gekennzeichnet, dass** sowohl das eine Paar von gegenüberliegenden Außenseiten (6,7) als auch das andere Paar von gegenüberliegenden Außenseiten (8,9) lediglich dreieckige Felder aufweist, wobei zwischen zwei auf einer Dreieckseite stehenden Dreiecken ein auf der Spitze stehendes Dreieck angeordnet ist.

## Claims

1. A method for making a boom for spacecrafts, in particular satellites, from a full cube-shaped body, **characterized in that** the body is machined by a spark-erosion process each in two mutually transversely extending settings, which are preferably orthogonal or oriented at steep angles relative to each other, wherein several perforations extending through the body are each produced so as to provide a three-dimensional truss defined by the intersection of the crossing perforations.

2. A method according to claim 1, **characterized in that** the perforations are produced by wire erosion.

3. A method according to claim 1 or 2, **characterized in that** the body is made of an aluminum or titanium alloy.

4. A method according to claim 1, 2 or 3, **characterized in that** perforations having lozenge-shaped cross sections, or perforations having triangular cross sections, or combinations thereof, are each produced in the first setting and in the second setting.

5. A method according to claim 4, **characterized in that** perforations having lozenge-shaped and perforations having triangular cross sections are combined in such a manner that the lozenge-shaped cross sections abut one another by their vertices and two triangular regions remain between two adjacent lozenge-shaped cross sections, and that at least one perforation having a triangular cross section is each produced in the triangular regions.

6. A method according to claim 4 or 5, **characterized in that** the perforations having triangular cross sections comprise a dividing plane in their plane of symmetry.

7. A method according to claim 5 or 6, **characterized in that** a combination of perforations according to claim 5 or 6 is produced both in the first and in the second setting, wherein the divisions of the perforations produced in the first setting and having lozenge-shaped cross sections are offset by half a division relative to the divisions of the perforations produced in the second setting and having lozenge-shaped cross sections.

8. A method according to any one of claims 4 to 7, **characterized in that** the perforations having lozenge-shaped cross sections comprise a dividing plane in their plane of symmetry extending in the longitudinal direction of the truss.

9. A method according to any one of claims 4 to 6, **characterized in that** a combination of perforations according to claim 5 or 6 is produced in the first setting, and that only perforations having triangular cross sections are produced in the second setting, wherein an inverted triangle is each arranged between two triangles standing on triangle sides.

10. A method according to any one of claims 4 to 6, **characterized in that** only perforations having triangular cross sections are produced both in the first and in the second settings, wherein an inverted triangle is each arranged between two triangles standing on triangle sides.

11. A boom for spacecrafts, in particular satellites, comprising a three-dimensional truss (2) made from a full cube-shaped body (5), **characterized in that** the three-dimensional truss (2) is comprised of rods (27,28,29,30,32,34) whose cross sections are quadrangular, preferably rectangular or parallelogram-shaped, with a side length of the quadrangle smaller than 6 mm, preferably smaller than 4 mm.

12. A boom according to claim 11, **characterized in that** the body (5) is made of an aluminum or titanium alloy.

13. A boom according to claim 11 or 12, **characterized in that** the rods (27,28,29,30,32,34) are arranged in such a manner that lozenge-shaped fields (10,11,12,18,19) or triangular fields (13a,b - 17a-d; 20a,b - 26a,b), or combinations of lozenge-shaped fields and triangular fields, are formed on the outer sides of the truss (2).

14. A boom according to claim 13, **characterized in that** the rods (27,28,29,30) are arranged in such a manner that the lozenge-shaped fields (10,11,12,18,19) of an outer side (6,7,8,9) abut one another by their vertices, and at least two triangular fields (13a,b - 16a,b; 21a,b - 26a,b) are arranged between two adjacent lozenge-shaped fields (10,11,12,18,19).

15. A boom according to claim 13 or 14, **characterized in that** the triangular fields (13a,b - 16a,b; 21a,b - 26a,b) are divided by a zero rod (32) in the plane of the triangle.

16. A boom according to claim 13, 14 or 15, **characterized in that** the lozenge-shaped fields (10,11,12,18,19) and the triangular fields (13a,b - 17a-d; 20a,b - 26a,b), respectively, of the two opposing outer sides (6,7; 8,9) are each congruent in the normal projection.

17. A boom according to claim 16, **characterized in that** diagonal rods (33) extending between the outer sides (6,7,8,9) are arranged so as to be congruent with rods of the lozenge-shaped and triangular fields, respectively, in the normal projection.

18. A boom according to any one of claims 14 to 17, **characterized in that** the divisions of the lozenge-shaped fields (10,11,12) of one pair of opposing outer sides (8,9) are offset by half a division relative to the divisions of the lozenge-shaped fields (18,19) of the other pair of opposing outer sides (6,7).

19. A boom according to any one of claims 14 to 18, **characterized in that** the lozenge-shaped fields (10,11,12) in the plane of the lozenge are divided by a zero rod (34) extending in the longitudinal direction of the truss.

20. A boom according to any one of claims 14 to 17, **characterized in that** one pair of opposing outer sides (6,7) comprises a combination of fields according to claim 14 or 15, and that the other pair of opposing outer sides (8,9) merely comprises triangular fields, wherein an inverted triangle is each arranged between two triangles standing on triangle sides.

21. A boom according to claim 13 or 15, **characterized in that** both the pair of opposing outer sides (6,7) and the other pair of opposing outer sides (8,9) merely comprise triangular fields, wherein an inverted triangle is each arranged between two triangles standing on triangle sides.

## Revendications

1. Procédé de fabrication d'un bras pour véhicule spatial, en particulier satellite, à partir d'un corps parallélépipédique plein, **caractérisé en ce que** le corps est usiné en deux passes opérées transversalement l'une à l'autre, de préférence orthogonales ou formant entre elles un angle abrupt, respectivement à l'aide d'un procédé d'usinage par électroérosion, créant respectivement plusieurs découpures s'étendant à travers le corps de façon à obtenir un treillis spatial défini par l'intersection des découpures qui se croisent mutuellement.

2. Procédé selon la revendication 1, **caractérisé en ce que** les découpures sont réalisées par électroérosion par fil.

3. Procédé selon la revendication 1 ou 2, **caractérisé en ce que** le corps est en alliage d'aluminium ou en alliage de titane.

4. Procédé selon la revendication 1, 2 ou 3, **caractérisé en ce que** sont réalisées respectivement, lors de la première et de la seconde passe, des découpures de section transversale en forme de losange ou des découpures de section transversale triangulaire ou des combinaisons de celles-ci.

5. Procédé selon la revendication 4, **caractérisé en ce que** des découpures de section transversale en losange et des découpures de section transversale triangulaire sont combinées entre elles de telle sorte que les sections transversales en losange se touchent par leurs pointes et qu'entre deux sections transversales en losange adjacentes subsistent deux zones triangulaires, et **en ce qu'**est réalisée dans chaque zone triangulaire au moins une découpure de section transversale triangulaire.

6. Procédé selon la revendication 4 ou 5, **caractérisé en ce que** les découpures de section transversale triangulaire présentent un plan de division dans leur plan de symétrie.

7. Procédé selon la revendication 5 ou 6, **caractérisé en ce que**, lors de la première comme de la seconde passe, est réalisée une combinaison de découpures selon la revendication 5 ou 6, les pas des découpures de section transversale en losange réalisées lors de la première passe étant décalés d'un demi-pas par rapport aux pas des découpures de section transversale en losange réalisées lors de la seconde passe.

8. Procédé selon l'une des revendications 4 à 7, **caractérisé en ce que** les découpures de section transversale en losange présentent un plan de division dans leur plan de symétrie s'étendant dans la direction longitudinale de la poutre.

9. Procédé selon l'une des revendications 4 à 6, **caractérisé en ce qu'**est réalisée lors de la première passe une combinaison de découpures selon la revendication 5 ou 6 et **en ce que**, lors de la seconde passe, ne sont réalisées que des découpures de section transversale triangulaire, un triangle posé sur son sommet étant disposé entre deux triangles posés sur un côté de triangle.

10. Procédé selon la revendication 4 ou 6, **caractérisé en ce que**, lors de la première comme de la seconde passe, ne sont réalisées que des découpures de section transversale triangulaire, un triangle posé sur son sommet étant disposé entre deux triangles posés sur un côté de triangle.

11. Bras pour véhicule spatial, en particulier satellite, comprenant un treillis spatial (2) fabriqué à partir d'un corps parallélépipédique (5) plein, **caractérisé en ce que** le treillis spatial (2) est constitué de barres (27, 28, 29, 30, 32, 34) dont la section transversale est carrée, de préférence rectangulaire ou en forme de parallélogramme, une longueur de côté du carré étant inférieure à 6 mm, de préférence inférieure à 4 mm.

12. Bras selon la revendication 11, **caractérisé en ce que** le corps (5) est en alliage d'aluminium ou en alliage de titane.

13. Bras selon la revendication 11 ou 12, **caractérisé en ce que** les barres (27, 28, 29, 30, 32, 34) sont agencées de façon à former sur les côtés extérieurs du treillis (2) des panneaux en forme de losange (10, 11, 12, 18, 19) ou des panneaux triangulaires (13a, b - 17a-d ; 20a, b - 26a, b) ou des combinaisons de panneaux en losange avec des panneaux triangulaires.

14. Bras selon la revendication 13, **caractérisé en ce que** les barres (27, 28, 29, 30) sont agencées de sorte que les panneaux en losange (10, 11, 12, 18, 19) d'un côté extérieur (6, 7, 8, 9) se touchent par leurs pointes et qu'au moins deux panneaux triangulaires (13a, b - 16a-b ; 21a, b - 26a, b) sont disposés entre deux panneaux en losange (10, 11, 12, 18, 19) adjacents.

15. Bras selon la revendication 13 ou 14, **caractérisé en ce que** les panneaux triangulaires (13a, b - 16a-b ; 21a, b - 26a, b) sont divisés dans le plan du triangle par une barre à effort nul (32).

16. Bras selon la revendication 13, 14 ou 15, **caractérisé en ce que** les panneaux en losange (10, 11, 12, 18, 19) ou les panneaux triangulaires (13a, b - 17a-d ; 20a, b - 26a, b) des deux côtés extérieurs (6, 7 ; 8, 9) opposés coïncident entre eux respectivement dans la projection orthogonale.

17. Bras selon la revendication 16, **caractérisé en ce que** des barres diagonales (33) s'étendant entre les côtés extérieurs (6, 7, 8, 9) sont disposées de façon à coïncider dans la projection orthogonale avec des barres des panneaux en losange ou panneaux triangulaires.

18. Bras selon l'une des revendications 14 à 17, **caractérisé en ce que** les pas des panneaux en losange (10, 11, 12) d'une paire de côtés extérieurs (8, 9) opposés sont décalés d'un demi-pas par rapport aux pas des panneaux en losange (18, 19) de l'autre paire de côtés extérieurs (6, 7) opposés.

19. Bras selon l'une des revendications 14 à 18, **caractérisé en ce que** les panneaux en losange (10, 11, 12) sont divisés dans le plan du losange par une barre à effort nul (34) s'étendant dans la direction longitudinale de la poutre.

20. Bras selon l'une des revendications 14 à 17, **caractérisé en ce que** la paire de côtés extérieurs (6, 7) opposés présente une combinaison de panneaux selon la revendication 14 ou 15, et **en ce que** l'autre paire de côtés extérieurs (8, 9) opposés ne présente que des panneaux triangulaires, un triangle posé sur son sommet étant disposé entre deux triangles posés sur un côté de triangle.

21. Bras selon la revendication 13 ou 15, **caractérisé en ce que** la paire de côtés extérieurs (6, 7) opposés tout comme l'autre paire de côtés extérieurs (8, 9) opposés ne présente que des panneaux triangulaires, un triangle posé sur son sommet étant disposé entre deux triangles posés sur un côté de triangle.
